(19) Europäisches Patentamt
European Patent Office
Office européen des brevets

(11) **EP 2 912 081 B1**

(12) **EUROPÄISCHE PATENTSCHRIFT**

(45) Veröffentlichungstag und Bekanntmachung des Hinweises auf die Patenterteilung:
**06.02.2019 Patentblatt 2019/06**

(21) Anmeldenummer: **13789504.1**

(22) Anmeldetag: **23.10.2013**

(51) Int Cl.:
***C08G 18/42*** *(2006.01)*

(86) Internationale Anmeldenummer:
**PCT/EP2013/072117**

(87) Internationale Veröffentlichungsnummer:
**WO 2014/064130 (01.05.2014 Gazette 2014/18)**

(54) **VERFAHREN ZUR HERSTELLUNG VON POLYURETHANWEICHSCHAUMSTOFFEN AUF BASIS VON POLYESTERPOLYOLEN**

METHOD FOR PRODUCING FLEXIBLE POLYURETHANE FOAMS BASED ON POLYESTER POLYOLS

PROCÉDÉ DE FABRICATION DE MOUSSES SOUPLES EN POLYURÉTHANE À BASE DE POLYESTERPOLYOLS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.10.2012 EP 12190080**

(43) Veröffentlichungstag der Anmeldung:
**02.09.2015 Patentblatt 2015/36**

(73) Patentinhaber: **Covestro Deutschland AG
51373 Leverkusen (DE)**

(72) Erfinder:
• **NEFZGER, Hartmut
50259 Pulheim (DE)**
• **KLESCZEWSKI, Bert
51069 Köln (DE)**
• **MEYER-AHRENS, Sven
51375 Leverkusen (DE)**
• **KNAUP, Harald
41469 Neuss (DE)**

(74) Vertreter: **Levpat
c/o Covestro AG
Gebäude 4825
51365 Leverkusen (DE)**

(56) Entgegenhaltungen:
EP-A1- 0 017 060      EP-A1- 0 044 969
DE-A1- 19 528 539     DE-A1- 19 949 091
FR-A- 1 288 300       GB-A- 1 475 541
US-A- 4 331 555       US-A1- 2006 046 067

EP 2 912 081 B1

**Beschreibung**

Die vorliegende Erfindung betrifft ein Verfahren zur Herstellung von Polyurethanweichschaumstoffen, wobei als Ausgangsstoff eine Polyesterpolyolkomponente eingesetzt wird, die aus mindestens zwei Dicarbonsäuren aufgebaut ist.

Polyesterpolyole werden technisch durch Polykondensation der monomeren Dicarbonsäuren, deren Anhydride und/oder deren niedermolekularen Dialkylestern und Alkoholkomponenten erhalten.

Im Rahmen der Diskussion um die Schonung der Erdölvorräte wird ein möglicher Beitrag auf Seiten der Kunststoff herstellenden Industrie darin gesehen, derartige Materialien ganz oder teilweise auf nachwachsende Rohstoffe umzustellen. Technisch liegen diesbezüglich Bausteine in Reichweite, aus denen sich Polyesterpolyole herstellen lassen. d.h. aliphatische Polycarbonsäuren und aliphatische Polyole, während zu den entsprechenden aromatischen Polyisocyanaten derzeit noch kein technischer Zugang besteht.

Polyesterpolyol-basierte Polyurethan-Weichschaumstoffe an sich sind lange bekannt und breit beschrieben. Zur Herstellung der Polyesterpolyole werden im Stand der Technik eine ganze Reihe von aliphatischen und aromatischen Polycarbonsäuren offenbart. Exemplarisch sei beispielsweise DE 199 09 978 A1 genannt, nach der geeignete Polyesterpolyole durch Kondensation von organischen Dicarbonsäuren mit 2 bis 12 Kohlenstoffatomen und mehrwertigen Alkoholen herstellbar sind. Vorzugsweise werden Bernstein-, Glutar- und Adipinsäure, einschließlich deren Gemische verwendet. Auf Seiten der Polyole werden mehrwertige Alkohole mit 2 bis 12 Kohlenstoffatomen, besonders bevorzugt aus der Reihe Ethylenglykol bis Hexandiol-1,6, sowie vor allem Diethylenglykol und kleine Mengen an Glycerin und/oder Trimethylolpropan eingesetzt.

EP 0 672 696 A1 offenbart eine Reihe von Dicarbonsäuren, Diolen und Polyolen, die zur Herstellung von Polyesterpolyolen mit der Endanwendung in PUR-Weichschaum geeignet sind.

US 5,908,871 (col.3, li. 16), US 4,331,555 (col. 10, li. 6); FR 1 288 300 A (Polyester A und B), DE 195 28 539 A1 (Beispiele 2-4) und DE 199 49 091 A1 (Beispiele 1-2) offenbaren ebenfalls eine ganze Reihe von Edukten für den Aufbau von Polyesterpolyolen.

US 2006/0046067 A1 offenbart die Herstellung von Polyesterpolyolen, die erhältlich sind durch die Reaktion von mindestens zwei Dicarbonsäuren und mindenstens einem zwei und/oder merhwertigen aliphatischen Alkohol. Jedoch offenbart US 2006/0046067 Polyesterpolyole, die zu mehr als 5 Gew.-% aromatische Dicarbonsäuren enthalten.

EP 0 017 060 A1 offenbart ein Verfahren zur Herstellung von Polyurethan-Elastomeren durch Umsetzung von organischen Polyisocyanaten mit Polyesterpolyolen. Diese Polyesterpolyole weisen jedoch eine Estergruppenkonzentration von mehr als 9,80 mol/kg auf.

GB 1 475 541 A offenbart im Beispiel 3 die Herstellung eines Polyesterols, die aus eines Dicarbonsäuregemisches, bestehend aus Bernsteinsäure, Glutarsäure, Adipinsäure und Ethylenglykol erfolgt. Es wird die Herstellung von PUR-Schäumen beschrieben. Die Hydroxyzahl beträgt 54 mg KOH/g, die Säurezahl beträgt 0,4 mg KOH/g. Die sich rechnerisch ergebende Estergruppenkonzentration beträgt etwa 12,30 mol/kg.

GB 1 475 541 A und EP 0 044 969 A1 offenbaren Polyesterpolyole, die zur Herstellung von Polyurethan-Schäumen basierend auf Polyesterpololen bzw. zur Herstellung von thermoplastisch verarbeitebaren Polyurethanelastomeren verwendet werden. Diese Polyesterpolole weisen eine Estergruppenkonzentration von mehr als 9,80 mol/kg auf.

Das Polyurethane Handbook, 2nd Edition, (G. Oertel, Carl Hanser Verlag 1993) macht bezüglich der Auswahl der zur Herstellung von Polyester Weichschäumen einsetzbaren Polyesterpolyole keine näheren Angaben (siehe S. 201 und S. 67).

Aus den genannten Patentschriften ist ableitbar, dass in Polyesterpolyol-basierten Polyurethanweichschäumen die zahlenmittlere Molmasse des Polyesterpolyols im Bereich von ca. 2000 bis 4000 Da und die Hydroxylfunktionalität im Bereich von 2 bis 3 liegen sollten. Daher sollten alle bislang bekannten Polyesterpolyole, die in den Bereich der genannten Molmasse und der Hydroxylfunktionalität fallen, zur Herstellung von entsprechenden Polyurethanweichschäumen geeignet sein. Im Rahmen dieser Erfindung konnte jedoch gezeigt werden, dass nicht alle möglichen Polyesterpolyole zur Herstellung von Polyurethanweichschäumen geeignet sind.

Ein aus Bernsteinsäure, Diethylenglykol und 1,1,1-Trimethylolpropan aufgebautes Polyesterpolyol der Hydroxylzahl 60 mg KOH/g und einer Funktionalität von 2,7 entsprechend einer zahlenmittleren Molmasse von 2525 Da sollte daher zur Herstellung von Polyurethan-Weichschaum geeignet sein. Dies ist jedoch mitnichten der Fall. Vielmehr führt die Verwendung eines derartigen Polyesterpolyols im Unterschied zu einem Hydroxylzahl- und Funktionalitätsgleichen Polyesterpolyol, jedoch basierend auf Adipinsäure, bei ansonsten identischer Schaumrezeptur zum Kollaps des aufsteigenden Schaumes. Offenbar erfordern die Polyesterpolyol-Komponenten zusätzliche Anforderungen, um als Einsatzstoffe für die Herstellung von Polyurethanweichschäumen geeignet zu sein.

Aufgabe der vorliegenden Erfindung war es daher, ein Verfahren zur Herstellung von Polyurethanweichschaumstoffen bereitzustellen, das diesen Mangel beseitigt. Insbesondere im Hinblick auf ökologische Gründe wäre es vorteilhaft unter anderem auch Polyesterpolyol-Komponenten einzusetzen, die auf nachwachsenden Rohstoffen basieren.

Überraschend wurde gefunden, dass die zuvor genannte Aufgabe gelöst wird durch ein Verfahren zur Herstellung von Polyesterpolyol-basierten Polyurethanweichschaumstoffen durch Umsetzung von Komponente A (Polyolformulierung) enthaltend

A1 100 Gew.-Teile mindestens eines Polyesterpolyols mit einer Hydroxylzahl von 40 mg KOH/g bis 85 mg KOH/g, einer Säurezahl von weniger als 5 mg KOH/g und einer Estergruppenkonzentration von weniger als 9,80 mol/kg, bevorzugt von 2,0 bis 9,80 mol/kg und besonders bevorzugt von 6,0 bis 9,75 mol/kg, wobei das Polyesterpolyol erhältlich ist durch Reaktion von

A1.1. mindestens zwei Dicarbonsäuren und
A1.2 mindestens einem zwei- und/oder mehrwertigen aliphatischen Alkohol,

A2 0,5 bis 25 Gew.-Teile, bevorzugt 1,5 bis 6 Gew.-Teile (bezogen auf die Gew.-Teile der Komponente A1) Wasser und/oder physikalische Treibmittel,
A3 0,05 bis 10 Gew.-Teile, bevorzugt 0,2 bis 4 Gew.-Teile (bezogen auf die Gew.-Teile der Komponente A1) Hilfs- und Zusatzstoffe wie

a) Katalysatoren,
b) oberflächenaktive Zusatzstoffe,
c) Pigmente oder Flammschutzmittel,

A4 0 bis 10 Gew.-Teile, bevorzugt 0 bis 5 Gew.-Teile (bezogen auf die Gew.-Teile der Komponente A1) gegenüber Isocyanaten reaktionsfähigen Wasserstoffatomen aufweisenden Verbindungen mit einem Molekulargewicht von 62 - 399,

mit Komponente B enthaltend Di- und/oder Polyisocyanate,
wobei die Herstellung bei einer Kennzahl von 50 bis 250, bevorzugt 70 bis 130, besonders bevorzugt 75 bis 115 erfolgt, und wobei alle Gewichtsteilangaben der Komponenten A2 bis A4 in der vorliegenden Anmeldung auf 100 Gewichtsteile der Komponente A1 bezogen sind.

Weiterer Gegenstand der Erfindung sind die nach dem erfindungsgemäßen Verfahren hergestellten Polyesterpolyol-basierten Polyurethanweichschaumstoffe. Vorzugsweise weisen diese Polyurethanweichschaumstoffe eine Rohdichte gemäß DIN EN ISO 3386-1-98 im Bereich von • 10 kg/m$^3$ bis • 150 kg/m$^3$, vorzugsweise von • 20 kg/m$^3$ bis • 70 kg/m$^3$ und eine Stauchhärte gemäß DIN EN ISO 3386-1-98 im Bereich von • 0,5 kPa bis • 20 kPa (bei 40% Verformung und 4. Zyklus) auf.

Die Anmeldung beschreibt auch ein Verfahren zur Herstellung von Polyesterpolyolen A1 mit einer Hydroxylzahl von 40 mg KOH/g bis 85 mg KOH/g, einer Säurezahl von weniger als 5 mg KOH/g und einer Estergruppenkonzentration von weniger als 9,80 mol/kg, bevorzugt von 2,0 bis 9,80 mol/kg und besonders bevorzugt von 6,0 bis 9,75 mol/kg, wobei das Polyesterpolyol erhältlich ist durch Reaktion von

A1.1. mindestens zwei Dicarbonsäuren und
A1.2 mindestens einem zwei- und/oder mehrwertigen aliphatischen Alkohol.

Ein weiterer Gegenstand der Erfindung ist die Verwendung von Polyesterpolyolen A1 mit einer Hydroxylzahl von 40 mg KOH/g bis 85 mg KOH/g, einer Säurezahl von weniger als 5 mg KOH/g und einer Estergruppenkonzentration von weniger als 9,80 mol/kg, bevorzugt von 2,0 bis 9,80 mol/kg, besonders bevorzugt von 6,0 bis 9,75 mol/kg, wobei das Polyesterpolyol A1 erhältlich ist durch Reaktion von

A1.1. mindestens zwei Dicarbonsäuren und
A1.2 mindestens einem zwei- und/oder mehrwertigen aliphatischen Alkohol,

zur Herstellung von Polyurethanweichschaumstoffen.

Komponente A1

Die erfindungsgemäß eingesetzten Polyesterpolyole sind erhältlich durch Polykondensation von mindestens zwei Dicarbonsäuren (A1.1) und mindestens einem zwei- und/oder mehrwertigen aliphatischen Alkohol (A1.2), wobei die Polykondensation zumindest teilweise in Gegenwart eines Katalysators durchgeführt werden kann.
Vorzugsweise enthält Komponente A1 einen Polyester, der zu mindestens 95 Gew.-% ein aliphatischer Polyester ist und dessen Komponente A1.2 zu wenigstens 90 Gew.-% aus der Gruppe bestehend aus Ethylenglykol, Diethylenglykol und/oder Trimethylolpropan ausgewählt ist.

Die eingesetzten Polyesterpolyole weisen eine Säurezahl von weniger als 5 mg KOH/g, bevorzugt von weniger als 4 mg KOH/g auf. Dies kann dadurch erreicht werden, indem die Polykondensation beendet wird, wenn die Säurezahl des erhaltenen Reaktionsproduktes weniger als 5 mg KOH/g, bevorzugt weniger als 4 mg KOH/g beträgt. Die eingesetzten Polyesterpolyole weisen eine Hydroxylzahl von 40 mg KOH/g bis 85 mg KOH/g, bevorzugt von 45 bis 75 mg KOH/g und eine Funktionalität von 2 bis 6, bevorzugt von 2 bis 3, besonders bevorzugt von 2,2 bis 2,8 auf. Die Estergruppenkonzentration der eingesetzten Polyesterpolyole beträgt weniger als 9,80 mol/kg, bevorzugt von 2,0 bis 9,80 mol/kg und besonders bevorzugt von 6,0 bis 9,75 mol/kg.

Die Berechnung der Estergruppenkonzentration (Polarität) erfolgt unmittelbar aus der Rezeptur heraus, indem man zunächst die Ansatzgröße in [g] bestimmt, d.h. es wird die Summe in [g] aller eingesetzten Säurekomponenten und Alkoholkomponenten gebildet. Dann wird von dieser Summe das bei vollständigem Umsatz aller Carboxylgruppen rechnerisch ergebende Reaktionswasser abgezogen (Anzahl Carboxylgruppen x Molzahl der eingesetzten Carbonsäure [mol] x Molgewicht Wasser (=18g/mol)). Die in Estergruppen überführten Carboxylgruppen der eingesetzten Säure werden auf ein Kilogramm Polyester normiert. Daraus ergibt sich folgende Formel (I) :

$$\text{Estergruppenkonz. [mol/kg]} = \text{Mol der in Estergruppen überführte COOH-Gruppen [mol]}/$$

$$(\text{Ansatzgröße [g]} - \text{Menge Reaktionswasser bei vollständigem Umsatz [g]}) \times 1000 \qquad (I)$$

Die Funktionalität der Polyesterkomponente ergibt sich ebenfalls aus der Rezeptur nach der Formel (II):

$$\text{Funktionalität d. Polyesterkomponente} = \text{Anzahl der OH-Endgruppen} / \text{Anzahl der Moleküle} \qquad (II)$$

Die Anzahl der Moleküle erhält man, indem man von der Summe der Mole aller Einsatzstoffe die Mole an gebildeten Estergruppen abzieht. Im Fall, dass nur Polycarbonsäuren eingesetzt werden, entspricht die Molzahl an gebildeten Estergruppen der Molzahl an entstandenem Reaktionswasser. Bei Carbonsäureanhydriden entsteht entsprechend weniger Wasser, beim Einsatz von niedermolekularen Alkylestern entsteht an Stelle des Wassers niedermolekularer Alkohol.

Die Anzahl der OH-Endgruppen erhält man, indem man von den Molen an eingesetzten OH-Gruppen die Mole an in Estergruppen überführte Carboxylgruppen abzieht.

Komponente A1.1 umfasst mindestens zwei organische Dicarbonsäuren mit 2 bis 12, bevorzugt 2 bis 10 Kohlenstoffatomen zwischen den Carboxylgruppen. Geeignete Dicarbonsäuren sind beispielsweise Bernsteinsäure, Glutarsäure, Adipinsäure, Pimelinsäure, Korksäure, Azelainsäure, Sebacinsäure, Undeacandisäure, Dodecandisäure, Tridecandisäure und/oder Tetradeacandisäure oder ihrer Anhydride und/oder ihre niedermolekularen Dialkylester. Bevorzugt sind Bernsteinsäure, Glutarsäure, Adipinsäure, Pimelinsäure, Korksäure, Azelainsäure und/oder Sebacinsäure, besonders bevorzugt Bernsteinsäure, Adipinsäure, Azelainsäure und Sebacinsäure. In der Komponente A1.1 kann mindestens eine Dicarbonsäure enthalten sein, die nach einem fermentativen Verfahren herstellt wird oder einen biologischen Ursprung aufweist.

Zusätzlich zu den genannten aliphatischen Dicarbonsäuren kann eine Menge von bis zu 10 Gew.-% bezogen auf A1.1. an aromatischer Dicarbonsäure, wie beispielsweise Phthalsäure, Phthalsäureanhydrid, Isophthalsäure, Terephthalsäure und/oder deren Dialkylester verwendet werden.

Komponente A1.2 umfasst zwei- und/oder mehrwertige aliphatische Alkohole und/oder Polyetheralkohole mit einer Molekülmasse von $\geq$ 62 g/mol bis $\leq$ 400 g/mol. Hierzu zählen beispielsweise 1,4-Dihydroxycyclohexan, 1,2-Propandiol, 1,3-Propandiol, 2-Methylpropandiol-1,3, 1,5-Pentandiol, 1,6-Hexandiol, 1,8-Octandiol, Neopentylglykol, Ethylenglyol, Diethylenglykol, Triethylenglykol, Tetraethylenglykol, Dipropylenglykol, Tripropylenglykol, Dibutylenglykol, Tripropylenglykol, Glycerin, Pentaerythrit und/oder Trimethylolpropan. Bevorzugt sind hierbei Neopentylglykol, Diethylenglykol, Triethylenglykol, Trimethylolpropan und/oder Glycerin, besonders bevorzugt Ethylenglykol, Diethylenglkol und/oder Trimethylolpropan. In der Komponente A1.2 kann mindestens ein Alkohol enthalten sein, der nach einem fermentativen Verfahren herstellt wird oder einen biologischen Ursprung aufweist.

Die genannten Alkohole weisen Siedepunkte auf, bei denen ein Austragen zusammen mit Reaktionswasser vermieden werden kann und neigen bei den üblichen Reaktionstemperaturen auch nicht zu unerwünschten Nebenreaktionen.

Die Polyesterkondensation kann mit oder ohne geeignete Katalysatoren ausgeführt werden, die dem Fachmann bekannt sind.

Die Esterkondensationsreaktion kann bei verringertem Druck und erhöhter Temperatur bei gleichzeitigem destillativen Entfernen des bei der Kondensationsreaktion entstehenden Wassers, bzw. niedermolekularen Alkohols durchgeführt werden. Ebenso kann sie nach dem Azeotrop-Verfahren in Gegenwart eines organischen Lösungsmittels wie Toluol als Schleppmittel oder nach dem Trägergas-Verfahren, also durch Austreiben des entstehenden Wassers mit einem inerten Gas wie Stickstoff oder Kohlendioxid erfolgen.

Die Reaktionstemperatur bei der Polykondensation beträgt bevorzugt ≥ 150 °C bis ≤ 250 °C. Die Temperatur kann auch in einem Bereich von ≥ 180 °C bis ≤ 230 °C liegen.

Komponente A2

Als Komponente A2 werden Wasser und/oder physikalische Treibmittel eingesetzt. Als physikalische Treibmittel werden beispielsweise Kohlendioxid und/oder leicht flüchtige organische Substanzen als Treibmittel eingesetzt.

Komponente A3

Als Komponente A3 werden Hilfs- und Zusatzstoffe verwendet wie

a) Katalysatoren (Aktivatoren),
b) oberflächenaktive Zusatzstoffe (Tenside), wie Emulgatoren und Schaumstabilisatoren insbesondere solche mit niedriger Emission wie beispielsweise Produkte der Tegostab® LF-Serie,
c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise Trikresylphosphat oder Ammoniumpolyphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Als Katalysatoren werden bevorzugt aliphatische tertiäre Amine (beispielsweise Trimethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe, siehe zum Beispiel EP-A 0 176 013, insbesondere (3-Dimethylaminopropylamin)-harnstoff) und Zinn-Katalysatoren (wie beispielsweise Dibutylzinnoxid, Dibutylzinndilaurat, Zinnoctoat).

Als Katalysatoren werden besonders bevorzugt

α) Harnstoff, Derivate des Harnstoffs und/oder
β) Amine und Aminoether, welche jeweils eine funktionelle Gruppe enthalten, die mit dem Isocyanat chemisch reagiert. Vorzugsweise ist die funktionelle Gruppe eine Hydroxyl-Gruppe, eine primäre oder sekundäre Aminogruppe. Diese besonders bevorzugten Katalysatoren haben den Vorteil, dass diese ein stark reduziertes Migrations- und Emissionsverhalten aufweisen.

Als Beispiele für besonders bevorzugte Katalysatoren seien genannt: (3-Dimethylaminopropylamin)-Harnstoff, 2-(2-Dimethylaminoethoxy)ethanol, N,N-Bis(3-dimethylaminopropyl)-N-isopropanolamin, N,N,N-Trimethyl-N-hydroxyethyl-bisaminoethylether und 3-Dimethylaminopropylamin.

Komponente A4

Gegebenenfalls werden als Komponente A4 Verbindungen mit mindestens zwei gegenüber Isocyanaten reaktionsfähigen Wasserstoffatomen und einem Molekulargewicht von 32 bis 399 eingesetzt. Hierunter sind Hydroxylgruppen und/oder Aminogruppen und/oder Thiolgruppen und/oder Carboxylgruppen aufweisende Verbindungen zu verstehen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispielsweise können als Komponente A4 Ethanolamin, Diethanolamin, Triethanolamin, Sorbit und/oder Glycerin eingesetzt werden. Weitere Beispiele für Verbindungen gemäß Komponente A4 werden in EP-A 0 007 502, Seiten 16 - 17, beschrieben.

Komponente B

Geeignete Di- und/oder Polyisocyanate sind aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel (III)

$$Q(NCO)_n, \qquad (III)$$

in der

n = 2 - 4, vorzugsweise 2 -3,
und
Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP-A 0 007 502, Seiten 7 - 8, beschrieben werden. Bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird als Polyisocyanat mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt, besonders bevorzugt werden Gemische von 2,4- und 2,6-Toluylendiisocyanat als Polyisocyanat eingesetzt.
Zur Herstellung der Polyurethanweichschaumstoffe werden die Reaktionskomponenten nach dem an sich bekannten Einstufenverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.
Die Polyurethanweichschaumstoffe können als Form- oder auch als Blockschaumstoffe hergestellt werden. Gegenstand der Erfindung sind daher ein Verfahren zur Herstellung der Polyurethanweichschaumstoffe, die nach diesen Verfahren hergestellten Polyurethanweichschaumstoffe, die nach diesen Verfahren hergestellten Polyurethanweichblockschaumstoffe bzw. Polyurethanweichformschaumstoffe, die Verwendung der Polyurethanweichschaumstoffe zur Herstellung von Formteilen sowie die Formteile selbst. Die nach der Erfindung erhältlichen Polyurethanweichschaumstoffe finden beispielsweise folgende Anwendung: Möbelpolsterungen, Textileinlagen, Matratzen, Automobilsitze, Kopfstützen, Armlehnen, Schwämme und Bauelemente.
Die Kennzahl (Index) gibt das prozentuale Verhältnis der tatsächlich eingesetzten Isocyanat-Menge zur stöchiometrischen, d.h. für die Umsetzung der OH-Äquivalente berechnete Menge an Isocyanat-Gruppen (NCO)-Menge an.

$$\text{Kennzahl} = [(\text{Isocyanat-Menge eingesetzt}) : (\text{Isocyanat-Menge berechnet})] \bullet 100 \qquad (IV)$$

Polyurethanweichschaumstoffe in Sinne der vorliegenden Erfindung sind solche Polyurethanweichschaumstoffe, deren Rohdichte gemäß DIN EN ISO 3386-1-98 im Bereich von $\geq 10$ kg/m$^3$ bis $\leq 150$ kg/m$^3$, vorzugsweise im Bereich von $\geq 20$ kg/m$^3$ bis $\leq 70$ kg/m$^3$ liegt und deren Stauchhärte gemäß DIN EN ISO 3386-1-98 im Bereich von $\geq 0,5$ kPa bis $\leq 20$ kPa (bei 40% Verformung und im 4. Zyklus) liegt.

**Beispiele**

Die vorliegende Erfindung wird anhand der nachfolgenden Beispiele weiter erläutert. Hierbei haben die verwendeten Materialien und Abkürzungen die folgende Bedeutung und Bezugsquellen:

| | |
|---|---|
| Adipinsäure: | der Fa. BASF SE, Deutschland |
| Bernsteinsäure: | Bio-Bernsteinsäure der Fa. Reverdia (Joint Venture DSM und Roquette), Niederlande |
| Sebacinsäure: | Sebacinsäure JHG, der Fa. Jinghua, China |

Azelainsäure: Emerox® 1101 der Fa. Emery Oleochemicals GmbH, Deutschland

Glutarsäureanhydrid: Fa. Acros Deutschland

Monoethylenglykol: der Fa. INEOS GmbH, Deutschland

Diethylenglykol: der Fa. INEOS GmbH, Deutschland

Trimethylolpropan: der Fa. Lanxess AG, Deutschland

Zinn(II)-Chlorid-dihydrat: der Fa. Aldrich, Deutschland

B1: Toluylendiisocyanat mit einem Anteil von ca. 80 Gew.-% 2,4-Toluylendiisocyanat und ca. 20 Gew.-% 2,6-Toluylendiisocyanat der Fa. Bayer MaterialScience AG, Deutschland

B2: Toluylendiisocanant mit einem Anteil von ca. 65 Gew.-% 2,4-Toluylendiisocyanat und ca. 35 Gew.-% 2,6-Toluylendiisocyanat der Fa. Bayer MaterialScience AG, Deutschland.

A3-1: Silbyk® 9100: Polyethermodifiziertes Polysiloxan, Schaumstabilisator, BYK Chemie

A3-2: Tegostab® B 2370: Polysiloxan-polyoxyalkylen-blockcopolymer; Schaumstabilisator, Fa. Goldschmidt

A3-3: Tegostab® B 8324: Polysiloxan-polyoxyalkylen-blockcopolymer; Schaumstabilisator, Fa. Goldschmidt

A3-4: Katalysator: Gemisch aus 15 Gew.-Teilen RCA® 117 (N,N'-Dimethylpiperazin) der Fa. Rheinchemie GmbH, 15 Gew.-Teilen Niax® A30 der Fa. Momentive Performance Materials Inc. und 70 Gew.-Teilen eines linaren Polyetherpolyols mit einer OH-Zahl von 56 mg KOH/g und ca. 60 Mol-% primären OH-Endgruppen.

Die Analysen wurden wie folgt durchgeführt:

Dynamische Viskosität: Rheometer MCR 51 der Firma Anton Paar entsprechend DIN 53019. Hydroxylzahl (OH-Zahl) wurde gemäß DIN 53240 bestimmt.

Säurezahl wurde gemäß DIN 53402 bestimmt.

Die Rohdichte wurde gemäß DIN EN ISO 3386-1-98 bestimmt.

Die Stauchhärte wurde gemäß DIN EN ISO 3386-1-98 (bei 40 % Verformung im 1. und 4. Zyklus) bestimmt.

Der Druckverformungsrest DVR 50% (Ct) wurde bestimmt gemäß DIN EN ISO 1856-2001-03 Die Zugfestigkeit und Bruchdehnung wurden bestimmt gemäß DIN EN ISO 1798.

Herstellung der Polyesterpolyole A1 am Beispiel A1-1(V) - Vergleich:

In einem 10-Liter-Vierhalskolben, ausgestattet mit mechanischem Rührer, 50 cm Vigreux-Kolonne, Thermometer, Stickstoffeinleitung, sowie Kolonnenkopf, Destillationsbrücke und Vakuummembranpumpe, wurden 5111,6 g Adipinsäure (35 Mol, entspricht 55,2 Gew.-%), 3810 g (35,9 Mol, entspricht 41,15 Gew.-%) Diethylenglykol und 337,7 g (2,52 Mol, entspricht 3,65 Gew.-%) 1,1,1-Trimethylolpropan vorgelegt und unter Stickstoffüberschleierung im Verlauf von 60 min. auf 200 °C erhitzt, wobei Reaktionswasser destillativ entfernt wurde. Nach 8 Stunden wurden 160 mg Zinndichloriddihydrat (entspricht 20 ppm bezogen auf Endprodukt) zugegeben und die Umsetzung fortgeführt. Nach einer Reaktionszeit von insgesamt 15 Stunden wurde der Druck im Verlauf von 5 Stunden langsam auf 15 mbar verringert. Im Verlauf der weiteren Reaktion wurde die Säurezahl verfolgt: Nach einer Reaktionszeit von insgesamt 35 Stunden betrug die Säurezahl 1,25 mg KOH/g.

Analyse des Polyesters A1-1 (V):

| | |
|---|---|
| Hydroxylzahl: | 60,0 mg KOH/g, theoret. 66 mg KOH/g |
| Säurezahl: | 1,25 mg KOH/g |
| Viskosität: | 1280 mPas (75 °C) |

Die Berechnung der Estergruppenkonzentration erfolgt unmittelbar aus der Rezeptur heraus, indem man zunächst die Ansatzgröße bestimmt (5111,6 g + 3810 g + 337,7 g = 9259,3 g), davon das sich bei vollständigem Umsatz aller Carboxylgruppen rechnerisch ergebende Reaktionswasser (2x35 Mol x 18 g/Mol = 1260 g) abzieht und die in Estergruppen überführten Carboxylgruppen der Adipinsäure auf ein Kilo Polyester normiert :

Estergruppenkonzentration = 2 x 35 Mol / (9259,3 g -1260 g) x 1000 = 8,8 Mol Estergruppen / kg Polyester A1-1 (V)

Tabelle 1: Rezepturen von Polyesterpolyolen A1 - Stand der Technik (A1-1(V) und Vergleichsbeispiele (A1-2(V) bis A1-4(V))

|  |  | A1-1(V) | A1-2(V) | A1-3(V) | A1-4(V) |
|---|---|---|---|---|---|
|  |  |  |  |  |  |
| Adipinsäure | [Gew.-%] | 55,46 |  |  |  |
| Bernsteinsäure | [Gew.-%] |  | 50,27 | 49,53 | 49,93 |
| Diethylenglykol | [Gew.-%] | 41,23 | 46,31 | 45,85 | 47,96 |
| Trimethylolpropan | [Gew.-%] | 3,31 | 3,42 | 4,62 | 2,11 |
| - Reaktionswasser | [Gew.-%] | 13,66 | 15,33 | 15,1 | 15,22 |
| Zinn(II)chlorid*2$H_2$O | [ppm] | 20 | 20 | 20 | 20 |
| Eigenschaften: |  |  |  |  |  |
| OH-Zahl | [mg KOH/g] | 60 | 60,6 | 82,4 | 66,0 |
| Säurezahl | [mg KOH/g] | 1,25 | 0,6 | 0,96 | 0,18 |
| Funktionalität |  | 2,73 | 2,7 | 2,73 | 2,35 |
| Estergruppenkonzentration | [mol/kg] | 8,8 | 10,1 | 9,9 | 10,0 |
| Viskosität 75°C | [mPas] | 1280 | 2570 | 1360 | 1360 |
| (V) bedeutet Vergleich |  |  |  |  |  |

Die Polyester A1-1(V) bis A1-4(V) werden unter Verwendung von einer einzigen Dicarbonsäure aufgebaut. Lediglich Vergleichsbeispiel A1-1(V) weist eine Estergruppenkonzentration auf, die im anspruchsgemäßen Bereich liegt. A1-2(V) bis A1-4(V) weisen Estergruppenkonzentrationen von 9,9 mol/kg und höher auf, d.h. sie liegen außerhalb des erfindungsgemäßen Bereiches.

Herstellung von Polyurethan-Weichblockschaumstoffen unter Einsatz der Polyesterpolyole aus Tabelle 1

In für die Herstellung von Polyurethanschaumstoffen üblicher Verarbeitungsweise nach dem Einstufenverfahren werden die in den Beispielen der in der nachfolgenden Tabelle 2 aufgeführten Einsatzstoffe miteinander zur Reaktion gebracht.

Tabelle 2: Rezepturen zur Herstellung der Polyurethan-Weichblockschaumstoffen unter Verwendung der Polyesterpolyole aus Tabelle 1.

| Beispiel |  | 1(V) | 2(V) | 2A(V) | 3(V) | 4(V) | 4A(V) |
|---|---|---|---|---|---|---|---|
|  |  |  |  |  |  |  |  |
| A1-1(V) | [Tle.] | 100 |  |  |  |  |  |
| A1-2(V) | [Tle.] |  | 100 | 100 |  |  |  |
| A1-3(V) | [Tle.] |  |  |  | 100 |  |  |
| A1-4(V) | [Tle.] |  |  |  |  | 100 | 100 |
| Wasser (zugesetzt) | [Tle.] | 3,00 | 3,00 | 3,00 | 3,00 | 3,00 | 3,00 |
| A3-1 | [Tle.] |  | 1,00 |  | 1,00 | 1,00 | 1,00 |
| A3-2 | [Tle.] |  |  | 1,00 |  |  |  |
| A3-3 | [Tle.] | 1,00 |  |  |  |  |  |
| A3-4 | [Tle.] | 1,70 | 1.70 | 1,70 | 1,70 | 1,70 | 1,70 |
| Summe | [Tle.] | 105,70 | 105,7 | 105,7 | 105,7 | 105,7 | 105,7 |

(fortgesetzt)

| Beispiel | | 1(V) | 2(V) | 2A(V) | 3(V) | 4(V) | 4A(V) |
|---|---|---|---|---|---|---|---|
| | | | | | | | |
| | | | | | | | |
| B1 | [Tle.] | 19,20 | 19,20 | 19,20 | 20,62 | 19,69 | 19.69 |
| B2 | [Tle.] | 19,20 | 19,20 | 19,20 | 20,62 | 19.69 | 19.69 |
| Summe | [Tle.] | 38,41 | 38,40 | 38,40 | 41,24 | 39,38 | 39,38 |
| | | | | | | | |
| Kennzahl | | 100 | 100 | 100 | 100 | 100 | 100 |
| Startzeit | [s] | 15 | 15 | 20 | | 20 | 15 |
| Steigzeit | [s] | 83 | 15 | 15 | | 40 | 35 |
| Prüfdaten | | | | | | | |
| Rohdichte | [kg/m$^3$] | 39 | | | | | |
| Stauchhärte 40%, 1, | [kPa] | 11,67 | | | | | |
| Stauchhärte 40%, 4, | [kPa] | 6,46 | | | | | |
| DVR 50% | [%] | 3,0 | | | | | |
| Zugfestigkeit | [kPa] | 143 | | | | | |
| Bruchdehnung | [%] | 179 | | | | | |
| (V) bedeutet Vergleich; [Tle.] bedeutet Teile; Stauchhärte 40%, 1. bedeutet Stauchhärte 40%, gemessen nach 1. Zyklus; Stauchhärte 40%, 4. bedeutet Stauchhärte 40%, gemessen nach 4. Zyklus. | | | | | | | |

Aus den Polyesterpolyolen A1-2(V) bis A1-4(V) konnten keine PolyurethanWeichblockschaumstoffe (2(V) bis 4A(V) hergestellt werden, da diese beim Aufschäumen kollabierten. Es konnte lediglich ein Polyurethan-Weichblockschaumstoff mit dem Polyesterpolyol A1-1(V) hergestellt werden, welcher auf einer einzigen Dicarbonsäure basiert und daher außerhalb des erfindungsgemäßen Bereiches liegt.

**Tabelle 3:** Rezepturen von Polyesterpolyolen A1, hergestellt unter Verwendung von zwei Dicarbonsäuren.

| | | A1-5 | A1-6 | A1-7 | A1-8 | A1-9 | A1-10 | A1-11 | A1-12 | A1-13 | A1-14 | A1-15(V) | A1-16(V) |
|---|---|---|---|---|---|---|---|---|---|---|---|---|---|
| | | | | | | | | | | | | | |
| Adipinsäure | [Gew.-%] | | | | | | | | | | 21,57 | | |
| Sebacinsäure | [Gew.-%] | | 24,01 | 10,37 | 17,12 | 24,0 | 11,17 | 33,28 | 24,0 | 33,28 | | | |
| Bernsteinsäure | [Gew.-%] | 41,68 | 30,83 | 41,42 | 36,17 | 30,84 | 40,95 | 28,04 | 30,84 | 28,04 | 30,04 | 37,39 | 25,02 |
| Azelainsäure | [Gew.-%] | 10,00 | | | | | | | | | | | |
| Glutarsäureanhydrid | [Gew.-%] | | | | | | | | | | | 15,33 | 27,99 |
| Diethylenglykol | [Gew.-%] | 46,41 | 41,40 | 45,96 | 43,79 | 43,19 | 43,83 | 22,98 | 43,19 | 22,98 | 45,76 | 40,59 | 41,21 |
| Trimethylolpropan | [Gew.-%] | 2,13 | 3,75 | 2,25 | 2,92 | 1,97 | 4,05 | 2,25 | 1,97 | 2,25 | 2,63 | 1,92 | 1,93 |
| Monoethylenglykol | [Gew.-%] | | | | | | | 13,44 | | 13,44 | | 4,76 | 3,85 |
| - Reaktionswasser | [Gew.-%] | 14,69 | 13,67 | 14,47 | 14,07 | 13,67 | 14,47 | 14,47 | 13,67 | 14,47 | 14,47 | 15,58 | 15,25 |
| | | | | | | | | | | | | | |
| Zinn(II)chlorid*2H$_2$O | [ppm] | 20 | 20 | 20 | 20 | 20 | 20 | 20 | 20 | 20 | 20 | 20 | 20 |
| | | | | | | | | | | | | | |
| OH-Zahl | [mg KOH/g] | 66,7 | 65,6 | 71,5 | 67,5 | 62,0 | 70,8 | 61,7 | 61,2 | 69,6 | 73,0 | 58,8 | 58,9 |
| Säurezahl | [mg KOH/g] | 0,43 | 0,69 | 0,23 | 0,19 | 0,82 | 0,78 | 0,61 | 0,50 | 0,26 | 1,72 | 0,95 | 0,44 |
| Funktionalität | | 2,35 | 2,73 | 2,35 | 2,5 | 2,4 | 2,73 | 2,35 | 2,35 | 2,35 | 2,4 | 2,35 | 2,35 |
| Estergruppenkonzentration | [mol/kg] | 9,57 | 8,8 | 9,4 | 9,1 | 8,8 | 9,45 | 9,4 | 8,8 | 9,4 | 9,4 | 10,25 | 10 |
| | | | | | | | | | | | | | |
| Viskosität 75°C | [mPa*s] | 1130 | 1620 | 940 | 1110 | 980 | 1600 | 1170 | 1060 | 910 | 860 | 1290 | 1130 |
| (V) bedeutet Vergleich; | | | | | | | | | | | | | |

Die Herstellung der Polyesterpolyole A1-5 bis A1-16 gemäß Tabelle 3 erfolgte analog zur Herstellvorschrift zu Polyesterpolyol A1-1(V).

**Tabelle 4:** Rezepturen zur Herstellung der Polyurethan-Weichblockschaumstoffen unter Verwendung der Polyesterpolyole aus Tabelle 3.

| Beispiel | | 5 | 6 | 7 | 8 | 9 | 10 | 10A | 11 | 12 | 13 | 14 | 15(V) | 16(V) |
|---|---|---|---|---|---|---|---|---|---|---|---|---|---|---|
| A1-5 | [Tle.] | 100 | | | | | | | | | | | | |
| A1 | [Tle.] | | 100 | | | | | | | | | | | |
| A1-7 | [Tle.] | | | 100 | | | | | | | | | | |
| A1-8 | [Tle.] | | | | 100 | | | | | | | | | |
| A1-9 | [Tle.] | | | | | 100 | | | | | | | | |
| A1-10 | [Tle.] | | | | | | 100 | 100 | | | | | | |
| A1-11 | [Tle.] | | | | | | | | 100 | | | | | |
| A1-12 | [Tle.] | | | | | | | | | 100,09 | | | | |
| A1-13 | [Tle.] | | | | | | | | | | 100 | | | |
| A1-14 | [Tle.] | | | | | | | | | | | 100 | | |
| A1-15(V) | [Tle.] | | | | | | | | | | | | 100 | |
| A1-16 (V) | [Tle.] | | | | | | | | | | | | | 100 |
| Wasser (zugesetzt) | [Tle.] | 3.00 | 3.00 | 3.00 | 3.00 | 3.00 | 3.00 | 3.00 | 3.00 | 3.00 | 3.00 | 3.00 | 3.00 | 3.00 |
| A3-1 | [Tle.] | 1,00 | 1,00 | 1.00 | 1,00 | | | | | | | | | |
| A3-3 | [Tle.] | | | | | 1,00 | 1.00 | 1.00 | 1.00 | 1.00 | 1.00 | 1.00 | 1.00 | 1.00 |
| A3-4 | [Tle.] | 1.70 | 1.70 | 1.70 | 1,70 | 1,70 | 1.70 | 1.70 | 1.70 | 1.70 | 1.70 | 1.70 | 1.70 | 1.70 |
| Summe | [Tle.] | 105.7 | 105.70 | 105.70 | 105.7 | 105.7 | 105.70 | 105.7 | 105.7 | 105.79 | 105.70 | 105.7 | 105.70 | 105.70 |
| | | | | | | | | | | | | | | |
| B1 | [Tle.] | 19,75 | 19,71 | 20,17 | 19,81 | 19.36 | 20.11 | | 19.34 | 19,31 | 20.02 | 20.21 | 18,73 | 19,19 |
| B2 | [Tle.] | 19,75 | 19,71 | 20,17 | 19,81 | 19,36 | 20.11 | 39,99 | 19,34 | 19,31 | 20.02 | 20.21 | 18,73 | 19,19 |
| Summe | [Tle.] | 39,49 | 39,42 | 40,33 | 39,62 | 38,72 | 40,23 | 39,99 | 38,67 | 38,63 | 40,04 | 40,41 | 37,47 | 38,37 |
| | | | | | | | | | | | | | | |
| Kennzahl | | 100 | 100 | 100 | 100 | 100 | 100 | 100 | 100 | 100 | 100 | 100 | 100 | 100 |
| Startzeit | [s] | 10 | 15 | 13 | 13 | 14 | 15 | 15 | 15 | 13 | 15 | 15 | 17 | 14 |
| Steigzeit | [s] | 70 | 75 | 73 | 75 | 80 | 75 | 70 | 82 | 81 | 80 | 90 | 45 | 50 |

| Beispiel | | 5 | 6 | 7 | 8 | 9 | 10 | 10A | 11 | 12 | 13 | 14 | 15(V) | 16(V) |
|---|---|---|---|---|---|---|---|---|---|---|---|---|---|---|
| | | | | | | | | | | | | | | |
| Prüfdaten | | | | | | | | | | | | | | |
| Rohdichte | [kg/m | | 34,2 | 34,6 | 37 | 38 | 33,5 | 35 | 38 | 37 | 34,67 | 36 | | |
| Stauchhärte 40% 1, | [kPa] | | 11,06 | 9,57 | | 11,43 | 10,85 | 14,78 | 12,61 | 7,79 | 9,44 | 9,22 | | |
| Stauchhärte 40% 4, | [kPa] | | 6,26 | 5,58 | 5,35 | 6,17 | 6,21 | 8,44 | 6,96 | 4,87 | 5,41 | 4,91 | | |
| DVR 50% | [%] | | 4,4 | 7,9 | | 3,3 | 5,3 | 5,4 | 3,6 | | 7,8 | | | |
| Zugfestigkeit | [kPa] | | 135 | 157 | | 166 | 129 | 167 | 154 | | 185 | | | |
| Bruchdehnung | [%] | | 158 | 182 | | 244 | 134 | 128 | 219 | | 239 | | | |

Abkürzungen: (V) = Vergleichsbeispiel; Tle. = Gewichtsteile; Stauchhärte 40%, 1. bedeutet Stauchhärte 40%, gemessen nach 1. Zyklus; Stauchhärte 40%, 4. bedeutet Stauchhärte 40%, gemessen nach 4. Zyklus;

**Tabelle 5:** Rezepturen von Polyesterpolyolen A1, hergestellt unter Verwendung von drei Dicarbonsäuren.

|  |  | A1-17 | A1-18 | A1-19 | A1-20 | A1-21(V) | A1-22(V) |
|---|---|---|---|---|---|---|---|
| Sebacinsäure | [Gew.-%] | 8,50 | 4,03 | 6,21 | 9,13 |  |  |
| Bernsteinsäure | [Gew.-%] | 12,74 | 44,27 | 41,08 | 36,81 | 21,89 | 17,03 |
| Adipinsäure | [Gew.-%] | 33,59 | 2,91 | 4,49 | 6,60 | 7,74 | 21,08 |
| Glutarsäureanhydrid | [Gew.-%] |  |  |  |  | 24,49 | 19,05 |
| Diethylenglykol | [Gew.-%] | 43,19 | 46,85 | 46,28 | 45,51 | 38,52 | 29,89 |
| Trimethylolpropan | [Gew.-%] | 1,97 | 1,94 | 1,94 | 1,95 | 1,93 | 1,92 |
| Monoethylenglykol | [Gew.-%] |  |  |  |  | 5,42 | 11,02 |
|  |  |  |  |  |  |  |  |
| - Reaktionswasser | [Gew.-%] | -13,67 | -14,93 | -14,73 | -14,47 | -15,25 | -15,58 |
|  |  |  |  |  |  |  |  |
| Zinn(II)chlorid*2$H_2$O | [ppm] | 20 | 20 | 20 | 20 | 20 | 20 |
|  |  |  |  |  |  |  |  |
| OH-Zahl (exp.) | [mg KOH/g] | 61,0 | 57,8 | 58,2 | 62,1 | 65,0 | 59,8 |
| Säurezahl (exp.) | [mg KOH/g] | 0,58 | 0,72 | 1,0 | 0,88 | 0,34 | 0,47 |
| Funktionalität |  | 2,35 | 2,35 | 2,35 | 2,35 | 2,35 | 2,35 |
|  |  |  |  |  |  |  |  |
| Estergruppenkonzentration | [mol/kg] | 8,8 | 9,75 | 9,6 | 9,4 | 10 | 10,25 |
|  |  |  |  |  |  |  |  |
| Viskosität 75°C | [mPa*s] | 880 | 1550 | 1230 | 1140 | 840 | 1030 |
| (V) bedeutet Vergleich |  |  |  |  |  |  |  |

**Tabelle 6:** Rezepturen zur Herstellung der Polyurethan-Weichblockschaumstoffen unter Verwendung der Polyesterpolyole aus Tabelle 5.

|  |  | Stand der Technik | 17 | 18 | 19 | 20 | 21(V) | 22(V) |
|---|---|---|---|---|---|---|---|---|
| A1-1(V) | [Tle.] | 100 |  |  |  |  |  |  |
| A1-17 | [Tle.] |  | 100 |  |  |  |  |  |
| A1-18 | [Tle.] |  |  | 100 |  |  |  |  |
| A1-19 | [Tle.] |  |  |  | 100 |  |  |  |
| A1-20 | [Tle.] |  |  |  |  | 100 |  |  |
| A1-21(V) | [Tle.] |  |  |  |  |  | 100 |  |
| A1-22(V) | [Tle.] |  |  |  |  |  |  | 100 |
| Wasser (zugesetzt) | [Tle.] | 3.00 | 3.00 | 3.00 | 3.00 | 3.00 | 3.00 | 3.00 |
| A3-1 | [Tle.] |  |  |  |  |  |  |  |
| A3-3 | [Tle.] | 1 | 1 | 1 | 1 | 1 | 1,00 | 1.00 |
| A3-4 | [Tle.] | 1.70 | 1.70 | 1.70 | 1.70 | 1.70 | 1.70 | 1.70 |
| Summe | [Tle.] | 105,7 | 105,7 | 105,7 | 105,7 | 105,7 |  |  |

(fortgesetzt)

| | | Stand der Technik | 17 | 18 | 19 | 20 | 21(V) | 22(V) |
|---|---|---|---|---|---|---|---|---|
| B1 | [Tle.] | 19,27 | 19,90 | 19,10 | 19,13 | 19,44 | 19,66 | 19,00 |
| B2 | [Tle.] | 19,27 | 19,90 | 19,10 | 19,13 | 19,44 | 19,66 | 19,00 |
| Summe | [Tle.] | 38,55 | 39,81 | 38,21 | 38,27 | 38,87 | 39,32 | 38,00 |
| | | | | | | | | |
| Kennzahl | | 100 | 100 | 100 | 100 | 100 | 100 | 100 |
| Startzeit | [s] | 15 | 14 | 13 | 18 | 14 | 14 | 14 |
| Steigzeit | [s] | 80 | 77 | 75 | 92 | 83 | 65 | 73 |
| Prüfdaten | | | | | | | | |
| Rohdichte | [kg/m$^3$] | 37,4 | 37 | 36,8 | 38,4 | 37,6 | | |
| Stauchhärte 40%, 1. | [kPa] | 12,13 | 10,37 | 10,66 | 11,85 | 10,77 | | |
| Stauchhärte 40%. 4. | [kPa] | 6,64 | 5,91 | 5,86 | 6,48 | 5,93 | | |
| DVR 50% | [%] | 2.3 | 3,1 | 3.2 | 3 | 5,7 | | |
| Zugfestigkeit | [kPa] | 103 | 112 | 134 | 108 | 129 | | |
| Bruchdehnung | [%] | 147 | 169 | 214 | 170 | 181 | | |
| Abkürzungen: (V) = Vergleichsbeispiel; ; Tle. = Gewichtsteile; Stauchhärte 40%, 1. bedeutet Stauchhärte 40%, gemessen nach 1. Zyklus; Stauchhärte 40%, 4. bedeutet Stauchhärte 40%, gemessen nach 4. Zyklus; | | | | | | | | |

Die Polyurethanweichblockschaumstoffe der Beispiele 5 bis 14 gemäß Tabelle 4 weisen eine feine Zellstruktur in den Poren auf. Die Vergleichsversuche 15(V) und 16(V), die unter Verwendung von Polyesterpolyolen mit einer Estergruppenkonzentration außerhalb des erfindungsgemäßen Bereiches hergestellt wurden lieferten keine Polyurethanweichblockschaumstoffe, da diese während der Herstellung kollabierten.

Die Polyurethanweichblockschaumstoffe der Beispiele 17 bis 20 gemäß Tabelle 6 weisen eine feine Zellstruktur in den Poren auf. Vergleichsversuche 21(V) ergab einen Polyurethanweichblockschaum, der eine inhomogene Zellstruktur aufwies und Vergleichsversuch 22(V) ergab einen Polyurethanweichblockschaum, der gerissen ist. Die Vergleichsbeispiele 21(V) und 22(V) wurden unter Verwendung von Polyesterpolyolen mit einer Estergruppenkonzentration außerhalb des erfindungsgemäßen Bereiches hergestellt.

## Patentansprüche

1.   Verfahren zur Herstellung von Polyesterpolyol-basierten Polyurethanweichschaumstoffen durch Umsetzung von Komponente A enthaltend

   A1 100 Gew.-Teile mindestens eines Polyesterpolyols mit einer Hydroxylzahl von 40 mg KOH/g bis 85 mg KOH/g, einer Säurezahl von weniger als 5 mg KOH/g und einer Estergruppenkonzentration von weniger als 9,80 mol/kg, wobei das Polyesterpolyol erhältlich ist durch Reaktion von

   A1.1. mindestens zwei Dicarbonsäuren und
   A1.2 mindestens einem zwei- und/oder mehrwertigen aliphatischen Alkohol,

   A2 0,5 bis 25 Gew.-Teile (bezogen auf die Gew.-Teile der Komponente A1) Wasser und/oder physikalische Treibmittel,
   A3 0,05 bis 10 Gew.-Teile (bezogen auf die Gew.-Teile der Komponente A1) Hilfs- und Zusatzstoffe wie

a) Katalysatoren,
b) oberflächenaktive Zusatzstoffe,
c) Pigmente oder Flammschutzmittel,

A4 0 bis 10 Gew.-Teile (bezogen auf die Gew.-Teile der Komponente A1) gegenüber Isocyanaten reaktionsfähigen Wasserstoffatomen aufweisenden Verbindungen mit einem Molekulargewicht von 62 - 399,

mit Komponente B enthaltend Di- und/oder Polyisocyanate,
wobei die Herstellung bei einer Kennzahl von 50 bis 250 erfolgt, und
wobei alle Gewichtsteilangaben der Komponenten A2 bis A4 in der vorliegenden Anmeldung auf 100 Gewichtsteile der Komponente A1 bezogen sind.

2. Verfahren gemäß Anspruch 1, **dadurch gekennzeichnet, dass** Komponente A1 zu mindestens 95 Gew.-% einen aliphatischer Polyester enthält.

3. Verfahren gemäß einem der Ansprüche 1 oder 2, **dadurch gekennzeichnet, dass** als Komponente A1.1 mindestens zwei Verbindungen aus der Gruppe bestehend aus Bernsteinsäure, Glutarsäure, Adipinsäure, Pimelinsäure, Korksäure, Azelainsäure und/oder Sebacinsäure enthält.

4. Verfahren gemäß Anspruch 1 bis 3, **dadurch gekennzeichnet, dass** Komponente A1.2 zu wenigstens 90 Gew.-% aus der Gruppe bestehend aus Ethylenglycol, Diethylenglycol und/oder Trimethylolpropan ausgewählt ist.

5. Verfahren gemäß einem der Ansprüche 1 bis 4, **dadurch gekennzeichnet, dass** mindestens eine der Komponenten A1.1 und/oder A1.2 nach einem fermentativen Verfahren hergestellt wird und/oder einen biologischen Ursprung aufweist.

6. Verfahren gemäß einem der Ansprüche 1 bis 5, **dadurch gekennzeichnet, dass** als Komponente A1.1 fermentativ hergestellte Bernsteinsäure und/oder bio-basierte Sebacinsäure und/oder bio-basierte Azelainsäure eingesetzt wird.

7. Verfahren gemäß einem der Ansprüche 1 bis 6, wobei die Herstellung bei einer Kennzahl von 75 bis 115 erfolgt.

8. Verfahren gemäß einem der Ansprüche 1 bis 7, wobei als Komponente B mindestens eine Verbindung ausgewählt aus der Gruppe bestehend aus 2,4-Toluylendiisocyanat, 2,6-Toluylendiisocyanat, 4,4'-Diphenylmethandiisocyanat, 2,4'-Diphenylmethandiisocyanat, 2,2'-Diphenylmethandiisocyanat und Polyphenylpolymethylenpolyisocyanat eingesetzt wird.

9. Polyurethanweichschaumstoffe erhältlich nach einem Verfahren gemäß einem der Ansprüche 1 bis 8.

10. Verwendung von Polyesterpolyolen A1 mit einer Hydroxylzahl von 40 mg KOH/g bis 85 mg KOH/g, einer Säurezahl von weniger als 5 mg KOH/g und einer Estergruppenkonzentration von weniger als 9,80 mol/kg, wobei das Polyesterpolyol erhältlich ist durch Reaktion von

A1.1. mindestens zwei Dicarbonsäuren und
A1.2 mindestens einem zwei- und/oder mehrwertigen aliphatischen Alkohol,

und wobei das Polyesterpolyol zu mindestens 95 Gew.-% ein aliphatischer Polyester ist,
zur Herstellung von Polyurethanweichschaumstoffen.

11. Verwendung von Polyurethanweichschaumstoffen gemäß Anspruch 9 zur Herstellung von Möbelpolsterungen, Matratzen, Automobilsitzen, Kopfstützen, Armlehnen, Schwämme, Textileinlagen und Bauelementen.

**Claims**

1. Process for production of polyester polyol-based flexible polyurethane foams by reaction of component A containing

A1 100 parts by weight of at least one polyester polyol having a hydroxyl number of 40 mg KOH/g to 85 mg KOH/g, an acid number of less than 5 mg KOH/g and an ester group concentration of less than 9.80 mol/kg, wherein the polyester polyol is obtainable by reaction of

A1.1 at least two dicarboxylic acids and
A1.2 at least one di- and/or polyhydric aliphatic alcohol,

A2 0.5 to 25 parts by weight (based on the parts by weight of the component A1) of water and/or physical blowing agents,
A3 0.05 to 10 parts by weight (based on the parts by weight of the component A1) of auxiliary and additive substances such as

a) catalysts,
b) surface-active additives,
c) pigments or flame retardants,

A4 0 to 10 parts by weight (based on the parts by weight of the component A1) of compounds comprising isocyanate-reactive hydrogen atoms having a molecular weight of 62-399,

with component B containing di- and/or polyisocyanates,
wherein the production is carried out at an index of 50 to 250 and
wherein all reported parts by weight of the components A2 to A4 are in the present application based on 100 parts by weight of the component A1.

2. Process according to Claim 1, **characterized in that** component A1 contains to an extent of at least 95% by weight an aliphatic polyester.

3. Process according to either of Claims 1 or 2, **characterized in that** as component A1.1 contains at least two compounds from the group consisting of succinic acid, glutaric acid, adipic acid, pimelic acid, suberic acid, azelaic acid and/or sebacic acid.

4. Process according to Claim 1 to 3, **characterized in that** component A1.2 is selected to an extent of at least 90% by weight from the group consisting of ethylene glycol, diethylene glycol and/or trimethylolpropane.

5. Process according to any of Claims 1 to 4, **characterized in that** at least one of the components A1.1 and/or A1.2 is produced by a fermentative process and/or has a biological origin.

6. Process according to any of Claims 1 to 5, **characterized in that** as component A1.1 succinic acid produced by fermentative means and/or bio-based sebacic acid and/or bio-based azelaic acid is employed.

7. Process according to any of Claims 1 to 6, wherein the production is carried out at an index of 75 to 115.

8. Process according to any of Claims 1 to 7, wherein as component B at least one compound selected from the group consisting of 2,4-tolylene diisocyanate, 2,6-tolylene diisocyanate, 4,4'-diphenylmethane diisocyanate, 2,4'-diphenylmethane diisocyanate, 2,2'-diphenylmethane diisocyanate and polyphenylpolymethylenepolyisocyanate is employed.

9. Flexible polyurethane foams obtainable by a process according to any of Claims 1 to 8.

10. Use of polyester polyols A1 having a hydroxyl number of 40 mg KOH/g to 85 mg KOH/g, an acid number of less than 5 mg KOH/g and an ester group concentration of less than 9.80 mol/kg, wherein the polyester polyol is obtainable by reaction of

A1.1 at least two dicarboxylic acids and
A1.2 at least one di- and/or polyhydric aliphatic alcohol

and wherein the polyester polyol is to an extent of at least 95% by weight an aliphatic polyester, for the production of flexible polyurethane foams.

11. Use of flexible polyurethane foams according to Claim 9 for the production of furniture cushioning, mattresses, automobile seats, headrests, armrests, sponges, textile inserts and building elements.

**Revendications**

1. Procédé de fabrication de mousses souples de polyuréthane à base de polyester-polyol par mise en réaction d'un composant A contenant :

   A1 100 parties en poids d'au moins un polyester-polyol ayant un indice hydroxyle de 40 mg de KOH/g à 85 mg de KOH/g, un indice d'acidité inférieur à 5 mg de KOH/g et une concentration en groupes ester inférieure à 9,80 mol/kg, le polyester-polyol pouvant être obtenu par réaction de :

   A1.1 au moins deux acides dicarboxyliques et
   A1.2 au moins un alcool aliphatique bivalent et/ou d'une valence supérieure,

   A2 0,5 à 25 parties en poids (par rapport aux parties en poids du composant A1) d'eau et/ou d'agents gonflants physiques,
   A3 0,05 à 10 parties en poids (par rapport aux parties en poids du composant A1) d'adjuvants et d'additifs, tels que

   a) des catalyseurs,
   b) des additifs tensioactifs,
   c) des pigments ou des agents ignifuges,

   A4 0 à 10 parties en poids (par rapport aux parties en poids du composant A1) de composés comprenant des atomes d'hydrogène réactifs avec les isocyanates, ayant un poids moléculaire de 62 à 399,

   avec un composant B contenant des di- et/ou polyisocyanates,
   la fabrication ayant lieu à un indice de 50 à 250, et toutes les données de parties en poids des composants A2 à A4 dans la présente demande se rapportant à 100 parties en poids du composant A1.

2. Procédé selon la revendication 1, **caractérisé en ce que** le composant A1 contient au moins 95 % en poids d'un polyester aliphatique.

3. Procédé selon l'une quelconque des revendications 1 ou 2, **caractérisé en ce qu'**au moins deux composés du groupe constitué par l'acide succinique, l'acide glutarique, l'acide adipique, l'acide pimélique, l'acide subérique, l'acide azélaïque et/ou l'acide sébacique sont contenus en tant que composant A1.1.

4. Procédé selon les revendications 1 à 3, **caractérisé en ce que** le composant A1.2 est choisi à hauteur d'au moins 90 % en poids dans le groupe constitué par l'éthylène glycol, le diéthylène glycol et/ou le triméthylolpropane.

5. Procédé selon l'une quelconque des revendications 1 à 4, **caractérisé en ce qu'**au moins un des composants A1.1 et/ou A1.2 est fabriqué par un procédé de fermentation et/ou est d'origine biologique.

6. Procédé selon l'une quelconque des revendications 1 à 5, **caractérisé en ce que** de l'acide succinique fabriqué par fermentation et/ou de l'acide sébacique d'origine biologique et/ou de l'acide azélaïque d'origine biologique sont utilisés en tant que composant A1.1.

7. Procédé selon l'une quelconque des revendications 1 à 6, dans lequel la fabrication a lieu à un indice de 75 à 115.

8. Procédé selon l'une quelconque des revendications 1 à 7, dans lequel au moins un composé choisi dans le groupe constitué par le diisocyanate de 2,4-toluylène, le diisocyanate de 2,6-toluylène, le diisocyanate de 4,4'-diphénylméthane, le diisocyanate de 2,4'-diphénylméthane, le diisocyanate de 2,2'-diphénylméthane et le polyisocyanate de polyphénylpolyméthylène est utilisé en tant que composant B.

9. Mousses souples de polyuréthane, pouvant être obtenues par un procédé selon l'une quelconque des revendications 1 à 8.

**10.** Utilisation de polyester-polyols A1 ayant un indice hydroxyle de 40 mg de KOH/g à 85 mg de KOH/g, un indice d'acidité inférieur à 5 mg de KOH/g et une concentration en groupes ester inférieure à 9,80 mol/kg, le polyester-polyol pouvant être obtenu par réaction de :

>  A1.1 au moins deux acides dicarboxyliques et
>  A1.2 au moins un alcool aliphatique bivalent et/ou d'une valence supérieure,

et le polyester-polyol étant à hauteur d'au moins 95 % en poids un polyester aliphatique,
pour la fabrication de mousses souples de polyuréthane.

**11.** Utilisation de mousses souples de polyuréthane selon la revendication 9 pour la fabrication de rembourrages de meubles, de matelas, de sièges automobiles, d'appuie-tête, d'accoudoirs, d'éponges, d'inserts textiles et d'éléments de construction.

# EP 2 912 081 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19909978 A1
- EP 0672696 A1
- US 5908871 A
- US 4331555 A
- FR 1288300 A
- DE 19528539 A1
- DE 19949091 A1
- US 20060046067 A1
- US 20060046067 A
- EP 0017060 A1
- GB 1475541 A
- EP 0044969 A1
- EP 0000389 A
- EP 0176013 A
- EP 0007502 A
- EP 355000 A

**In der Beschreibung aufgeführte Nicht-Patentliteratur**

- **G. OERTEL.** Das Polyurethane Handbook. Carl Hanser Verlag, 1993
- **G. OERTEL.** Kunststoff-Handbuch. Carl-Hanser-Verlag, 1993, vol. 3, 104-127
- **W. SIEFKEN.** *Justus Liebigs Annalen der Chemie,* vol. 562, 75-136
- **VIEWEG ; HÖCHTLEN.** Kunststoff-Handbuch. Carl-Hanser-Verlag, 1993, vol. VII, 139-265